# EUROPEAN PATENT APPLICATION

(11) **EP 4 793 656 A1**
(43) Date of publication of application: **19.08.2026**
(21) Application number: 26157441.2
(22) Date of filing: 10.02.2026
(51) Int. Cl.: G01S 7/35, G01S 7/40, G01S 13/42, G01S 13/88, G01S 13/89, G01S 13/86, G01S 17/46

(54) **METHOD OF DYNAMICALLY ADJUSTING RADAR TRANSMISSION POWER, AND SYSTEM THEREOF, AND PORTABLE IMAGING SYSTEM**

(30) Priority: 14.02.2025 US 202563758527 P
(71) Applicant: National Taipei University of Technology, Taipei 10608 (TW)
(72) Inventor: CHUNG, MING-AN, 10608 Taipei (TW); CHAI, SUNG-YUN, 10608 Taipei (TW); HSU, CHIA-CHUN, 10608 Taipei (TW); HSIEH, MING-CHUN, 10608 Taipei (TW); HUANG, SHANG-JUI, 10608 Taipei (TW); CHEN, KAI-SHAWN, 10608 Taipei (TW); ZHANG, JUN-HAO, 10608 Taipei (TW); ZHANG, ZHI-XUAN, 10608 Taipei (TW)
(74) Representative: Metida

(57) **Abstract**

A method of dynamically adjusting radar transmission power is disclosed by the present disclosure. The method comprises steps of: transmitting a beam to scan an environment by a transmitting device; receiving an echo signal reflected by a target in the environment by a receiving device; converting the echo signal into a digital signal by an analog-to-digital converter; setting a transmission power threshold value based on the distance and the echo intensity, calculating a transmission power configuration based on the transmission power threshold value, and generating a control signal by the control module based on the transmission power configuration; and adjusting a transmission power by an attenuator based on the control signal, wherein the transmission power is utilized by the transmitting device to perform scanning of the target. A system of dynamically adjusting radar transmission power and a portable imaging system are further disclosed by the present disclosure.

## Description

### CROSS REFERENCE TO RELATED APPLICATIONS

This application claims the benefit of U.S. Provisional Application No. 63/758,527, filed on February 14, 2025, the entirety of which is incorporated by reference herein.

### BACKGROUND of the invention

### Field of the Invention

The present disclosure relates to an imaging system and a imaging method, and, in particular, to a method of dynamically adjusting radar transmission power and a system thereof ,and a portable imaging system based on terahertz, sub-terahertz, millimeter wave and optics.

### Description of the Related Art

Terahertz imaging technologies are detection techniques that utilize electromagnetic waves in a frequency range of 0.1 THz to 10 THz with both electrical and optical properties. Terahertz-based imaging is non-contact and non-destructive. In other word, the material under inspection remains structurally intact. These characteristics confer unique advantages to terahertz imaging in material inspection and image-based analysis.

Terahertz waves can penetrate non-metallic materials such as plastics, fibers, ceramics, and composites, and can be absorbed or reflected by different materials. Furthermore, by reflective imaging and semi-transmissive imaging methods, terahertz imaging technologies can detect internal structures of materials to identify defects such as cracks and damage, as well as analyze properties and structure of materials.

In industries such as railways, aviation, and infrastructure (including cracks of bridges and tunnels), inspections of material and structure are particularly important. For instance, fatigue cracks in aircraft materials can directly affect structural integrity and strength of the aircraft. As a result, aircraft are typically inspected every 750 flight hours. Failure to detect such cracks at an early stage may pose a serious threat to flight safety.

Current industry demands for inspection technologies are primarily focused on high efficiency, high accuracy, and operational convenience. Inspection systems are expected to be capable of detecting a wide range of defects, including delamination, debonding, dents, cracks, holes, water ingress, burns, and lightning strikes.

However, current terahertz imaging systems are large, while many targets to be inspected are large, resulting in a cumbersome and inefficient inspection process. Additionally, terahertz technologies may be limited in certain inspection situations. For example, terahertz technologies are more suitable for thin structures in dent detection, resulting in incomplete or inadequate inspection in thicker or more complex materials.

From the above, the conventional imaging detection systems need to be improved.

### Brief Summary of the Invention

A main purpose of the present disclosure is to provide a portable imaging system to improve speed, accuracy, and convenience of detection of structure.

An embodiment of the present disclosure provides a method of dynamically adjusting radar transmission power, comprising the following steps: S 10: transmitting a beam to scan an environment to be tested by a transmitting device; S20: receiving an echo signal reflected by a target in the environment to be tested by a receiving device; S30: capturing the echo signal and converting the echo signal into a digital signal by an analog-to-digital converter, so as to calculate and analyze a distance to, and echo intensity of, the target; S40: setting a transmission power threshold value by a control module based on the distance and the echo intensity; S50: calculating a transmission power configuration by the control module based on the transmission power threshold value; S60: generating a control signal based on the transmission power configuration by the control module; and S70: adjusting a transmission power by an attenuator based on the control signal, wherein the transmission power is utilized by the transmitting device to perform scanning of the target.

In an embodiment of the present disclosure, in step of S10, an angle of the beam of the transmitting device is adjusted by a phase control module.

In an embodiment of the present disclosure, in step of S20, the target is a plurality of targets, and the receiving device is configured to receive the echo signal reflected by each one of the plurality of targets, and in step of S30, the distance and the echo intensity of each one of the plurality of targets are calculated and analyzed.

In an embodiment of the present disclosure, the method further comprises a step of S80: monitoring and analyzing a signal-to-noise ratio of the receiving device by a monitoring module to obtain a signal-to-noise ratio result, and evaluating an effect of the transmission power based on the signal-to-noise ratio result.

In an embodiment of the present disclosure, when the signal-to-noise ratio result is lower than a target value, the transmission power configuration is adjusted by the control module, thereby adjusting the transmission power of the transmission power of the transmitting device.

In an embodiment of the present disclosure, when the transmitting device is continuously configured to scan the environment to be tested and a plurality of signal-to-noise ratio results are continuously obtained, a current transmission power configuration is determined based on the previously obtained signal-to-noise ratio result to decide whether an adjustment of the current transmission power configuration is required.

In order to achieve the above-mentioned purpose, another embodiment of the present disclosure provides a system of dynamically adjusting radar transmission power for performing the method of dynamically adjusting radar transmission power as mentioned above, comprising: a transmitting device configured to scan an environment to be tested by transmitting a beam; a receiving device configured to receive an echo signal reflected by a target in the environment to be tested; an analog-to-digital converter electrically connected to the receiving device and configured to capture the echo signal and convert the echo signal into a digital signal, so as to calculate and analyze a distance to, and echo intensity of, the target; a control module electrically connected to the analog-to-digital converter and configured to set a transmission power threshold value based on the distance and the echo intensity, calculate a transmission power configuration based on the transmission power threshold value, and generate a control signal based on the transmission power configuration; and an attenuator electrically connected to the control module and configured to adjust a transmission power based on the control signal, wherein the transmission power is utilized by the transmitting device to perform scanning of the target.

In an embodiment of the present disclosure, the system further comprises a phase control module electrically connected to the transmitting device and configured to adjust an angle of the beam of the transmitting device.

In an embodiment of the present disclosure, the system further comprises a monitoring module configured to monitor and analyze a signal-to-noise ratio of the receiving device to obtain a signal-to-noise ratio result, and evaluate an effect of the transmission power based on the signal-to-noise ratio result.

In order to achieve the above-mentioned purpose, another embodiment of the present disclosure provides a portable imaging system for performing the method of dynamically adjusting radar transmission power as mentioned above, comprising: a handheld detection component including a body and a probe assembly, wherein the probe assembly is disposed on the body and includes a radar unit and an image acquisition unit, the radar unit is selected from the group consisting of a terahertz radar unit, a sub-terahertz radar unit, and a millimeter wave radar unit, and the radar unit comprises: an oscillator, a frequency synthesizer, a phase control module, a power amplifier, an attenuator, a transmitting device, a receiving device, an analog-to-digital converter, and a digital front end, wherein the oscillator and the frequency synthesizer are configured to generate a carrier wave in a range of 30 to 300 GHz (millimeter wave, sub-terahertz, and terahertz frequency bands), the phase control module is configured to receive the carrier wave to adjust phase of the carrier wave, the power amplifier is electrically connected to the phase control module and is configured to amplify the carrier wave with adjusted phase, the attenuator is electrically connected to the power amplifier and is configured to adjust a transmission power based on a control signal, wherein the transmission power is utilized by the transmitting device to perform scanning of the target, the transmitting device is electrically connected to the attenuator and is configured to transmit the carrier wave to an environment to be tested with the transmission power, the receiving device is configured to receive an echo signal reflected by a target in the environment to be tested, the analog-to-digital converter is electrically connected to the receiving device and is configured to convert the echo signal into a digital signal, and the digital front end is electrically connected to the analog-to-digital converter and is configured to process the digital signal; a host electrically connected to the handheld detection component, and comprising a control module, wherein the control module is configured to receive and analyze processed digital signal from the digital front end to obtain an imaging result, wherein the analog-to-digital converter is further configured to calculate and analyze a distance to, and echo intensity of, the target based on the digital signal; and the control module is further configured to set a transmission power threshold value based on the distance and the echo intensity, calculate a transmission power configuration based on the transmission power threshold value, and generate the control signal based on the transmission power configuration.

In an embodiment of the present disclosure, the host further includes a monitoring module configured to monitor and analyze a signal-to-noise ratio of the receiving device to obtain a signal-to-noise ratio result, and evaluate an effect of the transmission power based on the signal-to-noise ratio result.

In an embodiment of the present disclosure, the host further includes a hardware-software switching module configured to switch among a hardware beam switching mode, a software beam switching mode, and a hybrid mode to adjust the carrier wave, wherein in the hardware beam switching mode, the transmitting device is activated by the hardware-software switching module to switch the carrier wave to a desired beam direction; in the software beam switching mode, phase offset of the transmitting device is calculated by the control module, and phase of the carrier wave is adjusted by the phase control module based on the phase offset, so that beam of the carrier wave is oriented to the desired beam direction; and in the hybrid mode, the transmitting device is first activated to switch the carrier wave to the desired beam direction, and then the phase offset of the transmitting device is calculated by the control module, and the phase of the carrier wave is adjusted by the phase control module based on the phase offset.

### Benefit effects:

In the method of dynamically adjusting radar transmission power of the present disclosure, the attenuator is introduced in the transmitting end (e.g., the radar antenna) and front end of the power amplifier to provide a function of dynamically adjusting the transmission power, allowing the transmission power to be dynamically adjusted according to environmental requirements, thereby enhancing the signal-to-noise ratio (SNR). Furthermore, the effect of the power adjustment is evaluated by the SNR at the receiving end and validated. If the SNR fails to reach a desired value, the power configuration is further optimized based on the latest data, continuously improving the adaptability and precision of the transmission power, so as to form a dynamic, optimized closed-loop control process, ensuring the system maintains optimal performance in a dynamic environment. Moreover, in the portable imaging system of the present disclosure, application time and place are more flexible by the portable structure. In addition, by utilizing terahertz/sub-terahertz/millimeter-wave radar as the core sensor, complemented by cameras and structured light sensors, image detection provided by the camera enables the simultaneous identification of the position and classification of multiple objects within images or videos, and the completeness, efficiency, and precision of planar damage analysis, internal damage detection, and advanced material structure assessment are improved by the structured light sensor with high accuracy in depth sensing. As a result, the portable imaging system of the present disclosure can be widely applied in fields such as aircraft maintenance, track inspection, building structural inspection, and more.

### BRIEF DESCRIPTION OF the DRAWINGS

The present disclosure can be more fully understood by reading the subsequent detailed description and examples with references made to the accompanying drawings, wherein:
FIG. 1 is a perspective schematic diagram of a portable imaging system according to an embodiment of the present disclosure;
FIG. 2 is a block diagram of a portable imaging system according to an embodiment of the present disclosure;
FIG. 3 is a schematic diagram illustrating an operational flow of a portable imaging system according to an embodiment of the present disclosure;
FIG. 4 is a flowchart illustrating a method of dynamically adjusting radar transmission power according to an embodiment of the present disclosure; and
FIG. 5 is a flowchart illustrating a method of dynamically adjusting radar transmission power according to another embodiment of the present disclosure.

### Detailed Description of the Invention

The following description is made for the purpose of illustrating the general principles of the invention and should not be taken in a limiting sense. The scope of the invention is best determined by reference to the appended claims.

As used herein, the singular forms "a", "an" and "the" as used in the description and the appended claims are intended to include the plural forms as well, unless expressly stated otherwise. The term "or" as used in the description and the appended claims is intended to include "and/or", unless expressly stated otherwise.

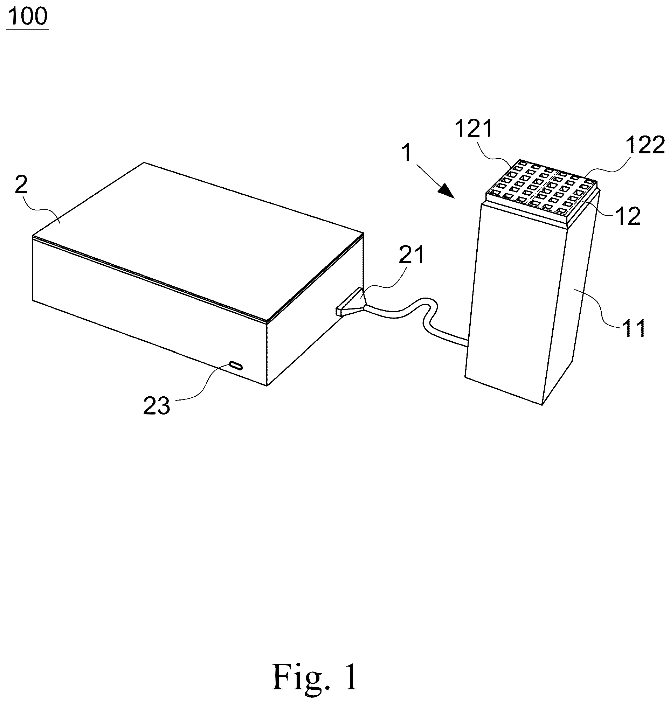

Refer to FIG. 1. A portable imaging system 100 according to an embodiment of the present disclosure includes a handheld detection component 1 and a host 2.

Refer to FIG. 1 to FIG. 3. The handheld detection component 1 includes a body 11 and a probe assembly 12. The probe assembly 12 is disposed on the body 11 and includes an image acquisition unit 1, such as a camera 113 (e.g., Complementary Metal-Oxide-Semiconductor, CMOS) and a radar unit, i.e., a radar 115. The radar unit is selected from the group consisting of a terahertz radar unit, a sub-terahertz radar unit, and a millimeter wave radar unit. The radar 115 includes an oscillator (Osc.) 1151, a frequency synthesizer 1152, a phase control module 1153, a power amplifier 1154, a transmitting device (a transmitting end) 1155, a receiving device (a receiving end) 1156, a low-noise amplifier 1157, an intermediate frequency (IF) processing module 1158, an analog-to-digital converter 1159, a digital front end 1160, and an attenuator 117.

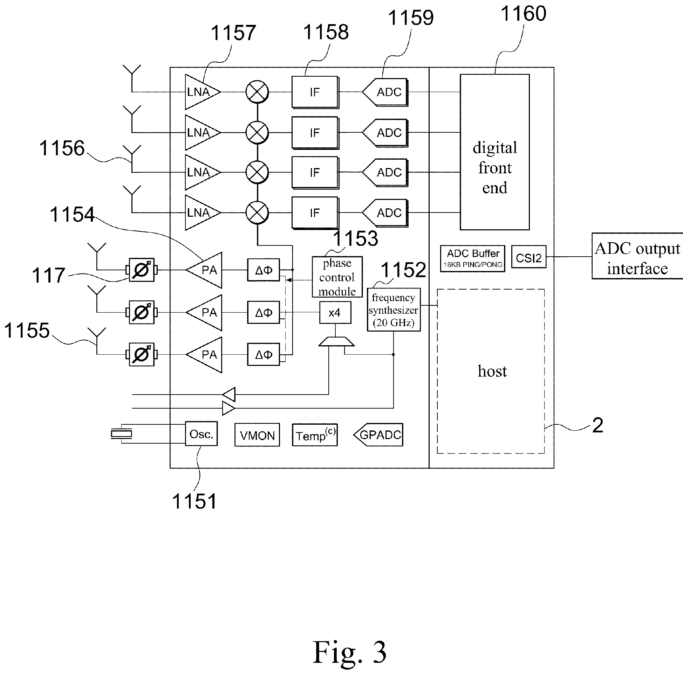

Refer to FIG. 3. The oscillator 1151 and the frequency synthesizer 1152 are configured to generate a carrier wave of 30 to 300 GHz (e.g., 30, 40, 50, 60, 70, 80, 90, 100, 200, 300 GHz). The phase control module 1153 is configured to receive the carrier wave to adjust phase of the carrier wave. Specifically, phases of the transmitted and received signals are adjusted by the phase control module 1153 through phase shift and beam control technology to achieve beamforming and scanning functions, leading to a detection in a specific direction by the radar. The power amplifier 1154 is electrically connected to the phase control module 1153 and is configured to amplify the carrier wave with adjusted phase. The attenuator 117 is electrically connected to the power amplifier 1154 and is configured to adjust a transmission power used by the transmitting device to scan the target based on a control signal. The transmitting device 1155 is electrically connected to the attenuator 117 and is configured to transmit the carrier wave to a environment to be tested with the transmission power. In the embodiment, the transmitting device 1155 is a transmitting antenna, and a transmitting device array 122 is formed at an end of the main body 11. The receiving device 1156 is a receiving antenna for receiving an echo signal (reflected signal) reflected by the target, and a receiving device array 121 is formed at the end of the main body 11. In the portable imaging system of the present disclosure, antenna gain is improved and a half-power beam width is reduced by the array antenna, so that more accurate data can be provided during C-Scan scanning. The low-noise amplifier 1157 is electrically connected to the receiving device 1156 for receiving and amplifying the echo signal. The intermediate frequency processing module 1158 is electrically connected to the low-noise amplifier 1157, allowing the amplified echo signal to be converted into an intermediate frequency signal that facilitates subsequent processing. The analog-to-digital converter (ADC) 1159 is electrically connected to the intermediate frequency processing module 1158, and is configured to convert the intermediate frequency signal into a digital signal. The ADC 1159 is further configured to calculate and analyze a distance to, and echo intensity of, a target based on the digital signal. Optionally, the analog-to-digital converter 1159 may be a SS analog-to-digital converter. The digital front end 1160 is electrically connected to the analog-to-digital converter 1159, and is configured to process the digital signal and finally output the digital signal to the host 2 via a data interface for subsequent analysis.

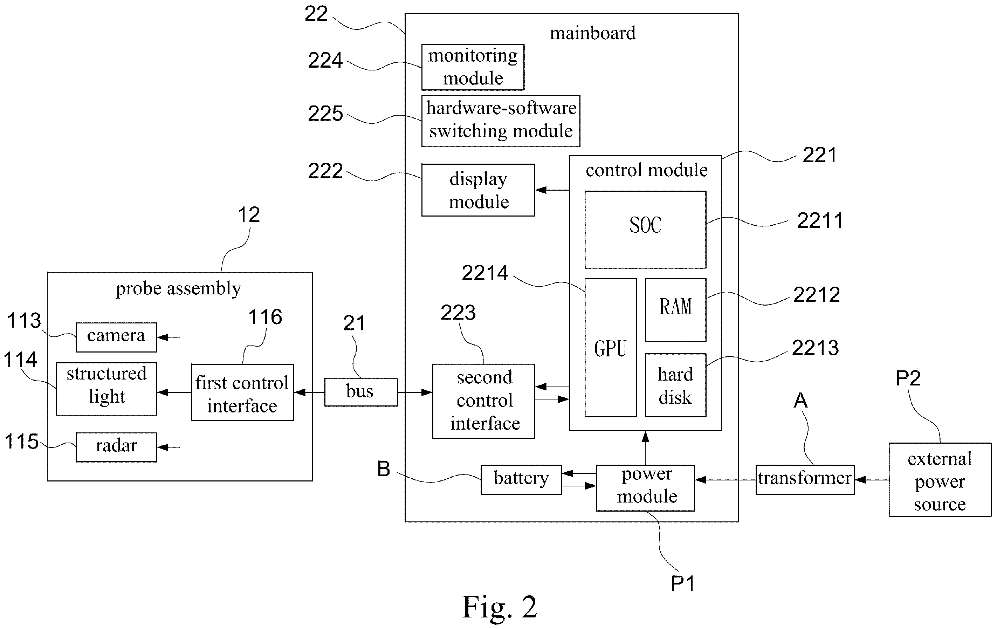

Refer to FIG. 2. The probe assembly 12 may further include a structured light unit, i.e., a structured light 114, which is electrically connected to the radar 115 and the camera 113. Preferably, the structured light unit may include an infrared emitter, an infrared camera module, and the like. An operating principle for the structured light primarily involves projecting a light spot with a specific pattern onto an object, which is then captured by the camera as a light-coded pattern on a surface of the object. By comparing the received pattern with the originally projected pattern and applying the triangulation principle, a three-dimensional coordinate of the object can be calculated. The technique is suitable for short-range measurement sensing.

The probe assembly 12 may further include a first control interface 116 electrically connected to the radar 115, the camera 113, and the structured light 114 for controlling coupling of the radar 115, the camera 113, and the structured light 114. In the embodiment, the first control interface 116 may be a serial peripheral interface bus (SPI) or an I2C interface.

Refer to FIG. 1 and FIG. 2. The host 2 may be electrically connected to the handheld detection component 1 by, for example, a bus 21, and further includes a mainboard 22 and a charging port 23. The mainboard 22 is disposed inside the host 2, and the charging port 23 is formed at a lower side of the host 2. The mainboard 22 includes a control module 221, a display module 222, a second control interface 223, an (internal) power module P1, a monitoring module 224, and a hardware-software switching module 225.

Refer to FIG. 2. The control module 221 is configured to receive and analyze the processed digital signal from the digital front end 1160 to obtain an imaging result. In addition, the control module 221 is further configured to set a transmission power threshold value based on the distance and the echo intensity, calculate a transmission power configuration based on the transmission power threshold value, and generate the control signal based on the transmission power configuration. Specifically, the control module 221 may include the following units: a system on a chip (SoC) 2211 configured to process digital signals, analog signals and mixed signals, etc.; a random-access memory (RAM) 2212 configured to store data (e.g., digital signals from the handheld detection component 1), and having function of short-term and high-speed access; a hard disk 2213 configured to store data; and a graphics processing unit (GPU) 2214 configured to enhance performance of various types of workloads, such as image processing, data analysis, and accelerated computation. The units within the control module 221 collectively constitute a core computing unit and are connected to external devices via the second control interface 223. For example, after detecting a target object via radar, corresponding data is transmitted to the control module 221 through the first control interface 116 for Synthetic-aperture radar (SAR) image processing. The imaging result is displayed on a touch-sensitive display (not shown), which is disposed on one side of the host 2, via a display module 222 electrically connected to the control module 221.

Refer to FIG. 2. The power module P1 for providing power to the handheld detection component 1 and the host 2 is electrically connected to the control module 221 and includes a charging module (not shown), a battery B and a voltage stabilizing module (not shown). Specifically, the voltage stabilizing module provides a constant and stable voltage for the battery B. The battery B may be a rechargeable battery. An external power source P2 provides power by a transformer A (e.g., an AC transformer) and charges the battery B, thereby enabling the portable imaging system 100 to operate by both direct power from the external power source and power supplied by the internal power source (i.e., the battery B). The internal power source ensures stable operation of the portable imaging system 100 when under portability requirements.

The second control interface 223 is electrically connected to the control module 221, and is configured to control coupling of multiple components in the control module 221. In the embodiment, the second control interface 223 may be a serial peripheral interface bus or an I2C interface.

The monitoring module 224 is configured to monitor and analyze a signal-to-noise ratio of the receiving device to obtain a signal-to-noise ratio result, and to evaluate an effect of the transmission power based on the signal-to-noise ratio result. When the signal-to-noise ratio result is lower than a target value, the control module is enabled to adjust the transmission power configuration, thereby adjusting the transmission power of the transmitting device. When the transmitting device is continuously configured to scan the environment to be tested and a plurality of signal-to-noise ratio results are continuously obtained, a current transmission power configuration is determined based on the previously obtained signal-to-noise ratio result to decide whether an adjustment to the current transmission power configuration is required.

The hardware-software switching module 225 is configured to switch among a hardware beam switching mode, a software beam switching mode, and a hybrid mode to adjust a beam direction of the carrier wave. The hardware beam switching mode is suitable for fixed or predetermined directions, while the software beam switching mode is suitable for dynamic scenarios or applications requiring high precision. The hybrid mode is applicable to complex environments, such as those involving multiple targets or requiring extensive area coverage. Preferably, an appropriate switching mode may be selected by the hardware-software switching module 225 according to system requirements, and a user of the system may be notified when necessary. In the hardware beam switching mode, the transmitting device (e.g., the antenna layer) may be activated by the hardware-software switching module 25, so as to rapidly switch the carrier to a desired beam direction. Specifically, in the mode, a target direction for switching is first determined by the hardware-software switching module 225, and then the corresponding antenna combination is activated or a layer configuration is changed, so as to rapidly switch the beam direction. In the software beam switching mode, the control module 221 is configured to calculate phase offset values for the transmitting device 1155 (e.g., for each one of antenna elements), and the phase of the carrier may be adjusted by the phase control module 1153 based on the calculated phase offsets, so that the beam of the carrier is directed towards the desired beam direction. Preferably, in the mode, the phase offset can be continuously updated in response to the continuously changing directions, allowing the beam to be dynamically and instantaneously adjusted in real time. In the hybrid mode, the transmitting device is initially activated to roughly switch the carrier toward a desired beam direction. Subsequently, the phase offset values for the transmitting device 1155 are calculated by the control module 221, and the phase of the carrier is then adjusted by the phase control module 1153 based on the calculated phase offsets, thereby achieving precise beam alignment and directional control. Preferably, when beamforming requirements change frequently or when coverage of multiple directions is needed, the hardware-software switching module 225 is configured to automatically switch between the hardware beam switching mode and the software beam switching mode. Preferably, the hardware-software switching module 225 is configured to continuously monitor operating status of the transmitting device such as antennas, to detect phase deviations and beam pointing, and is further configured to perform automatic correction. In addition, a ratio of the hardware beam switching mode to the software beam switching mode may be dynamically adjusted by the hardware-software switching module 225 according to the current beam stability, thereby balancing switching speed and accuracy.

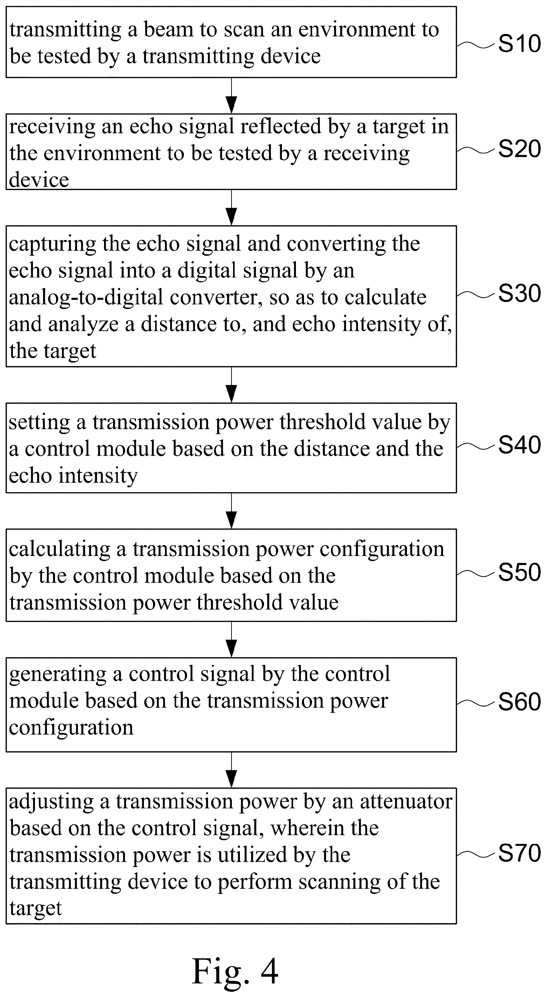

Refer to FIG. 4. A method of dynamically adjusting radar transmission power by the portable imaging system 100 according to an embodiment of the present disclosure comprises the following steps.

Step of S10: A beam is transmitted to scan an environment to be tested by a transmitting device. Optionally, in step of S10, a phase control module is used to adjust an angle of a beam of the transmitting device based on the following formula to perform an all-round scan of the surrounding environment: ${θ}_{n} = {θ}_{0} + n ⋅ Δ θ ,$ wherein *θ*ₙ represents the nth scanning angle, *θ*₀ represents an initial angle, and Δ*θ* represents an interval between successive scans.

Step of S20: An echo signal reflected by a target in the environment to be tested is received by a receiving device. Optionally, in step of S20, the target is a plurality of targets, and the receiving device is configured to receive the echo signal reflected by each one of the plurality of targets.

Step of S30: The echo signal is captured and converted into a digital signal by an analog-to-digital converter, so as to calculate and analyze a distance to, and echo intensity of, the target. Optionally, in step of S30, the distance and echo intensity of each one of the plurality of targets are calculated and analyzed. Specifically, the received signal data is digitized via an analog-to-digital converter (ADC), and data corresponding to each range bin is extracted. The extracted data includes information such as the target distance and echo intensity. Furthermore, the scanned data is processed by analyzing reflection characteristics of each target to determine a distance and echo intensity of each target. The target distance may correspond to a peak position in a signal, and may be calculated based on echo time, as shown in the following formula: $R = c ⋅ t 2 R = 2 c ⋅ t ,$ wherein tt represents echo time and cc represents speed of light.

Step of S40: A transmission power threshold value is set by a control module based on the distance and the echo intensity. Specifically, different power thresholds are set based on the target distance and signal intensity, as illustrated by the following formula. When the target is far and the signal intensity is low, attenuation is reduced to increase the transmission power. Conversely, when the target is close and the signal intensity is high, attenuation is increased to reduce the transmission power, thereby preventing excessive energy consumption or interference. ${P}_{T} = \left\{\begin{matrix}{P}_{max} , & If R > {R}_{th 1} and {S}_{RB} < {S}_{th 1} \\ {P}_{min} , & If R < {R}_{th 2} and {S}_{RB} > {S}_{th 2} \\ {P}_{opt} , & Other situations\end{matrix}\right.$

Step of S50: A transmission power configuration is calculated by the control module based on the transmission power threshold value. Optionally, the transmission power configuration is determined based on A-Scan data.

The required transmission power may be calculated by the following formula: ${P}_{T} = {P}_{max} ⋅ {e}^{- αR} ,$ wherein *α* represents an environmental attenuation coefficient and *P*ₘₐₓ represents a maximum transmission power.

A variable attenuation value is set and an attenuator parameter is determined based on calculation results: ${A}_{IB} = 10 {log}_{In} \left(\frac{{P}_{max}}{{P}_{T}}\right) ,$ wherein *A*_{dB} represents the attenuation value, ensuring that the transmission power meets optimal setting.

Step of S60: A control signal is generated by the control module based on the transmission power configuration. Specifically, an appropriate control voltage *V*ctrl is calculated by the control module, as shown in the following formula: ${V}_{ctrl} = {k}_{1} {A}_{dB} + {k}_{2} ,$ wherein *k*₁ and *k*₂ represent correction coefficients of the system.

Step of S70: A transmission power is adjusted by an attenuator based on the control signal. Specifically, the transmission power is utilized by the transmitting device to perform scanning of the target. Refer to the following formula: ${P}_{out} = {P}_{in} ⋅ {10}^{- {A}_{IB} / 10} ,$
wherein *P*ᵢₙ represents the input power, and *P*ₒᵤₜ represents the power after adjustment by the attenuation.

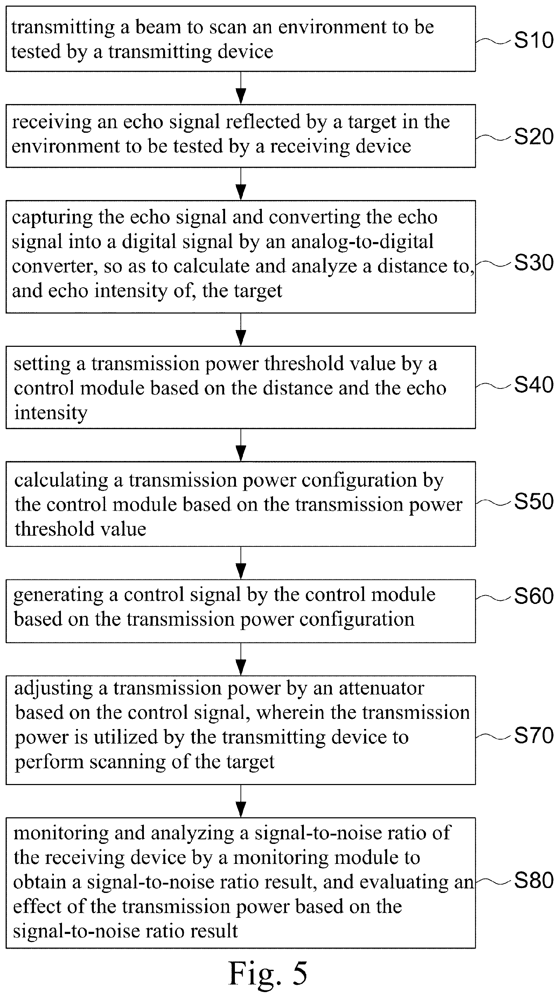

Refer to FIG. 5. According to another embodiment of the present disclosure, a method of dynamically adjusting radar transmission power using the aforementioned portable imaging system includes, in addition to the aforementioned steps of S10 to S70, a further step of S80.

Step of S80: a signal-to-noise ratio of the receiving device is monitored and analyzed by a monitoring module to obtain a signal-to-noise ratio result, and an effect of the transmission power is evaluated based on the signal-to-noise ratio result. When the SNR result is lower than a target value, the transmission power configuration is adjusted by the control module, thereby adjusting the transmission power of the transmission device. Optionally, when the transmitting device is continuously configured to scan the environment to be tested and a plurality of signal-to-noise ratio results are continuously obtained, a current transmission power configuration is determined based on the previously obtained signal-to-noise ratio result to decide whether an adjustment of the current transmission power configuration is required.

While the invention has been described by way of example and in terms of the preferred embodiments, it should be understood that the invention is not limited to the disclosed embodiments. On the contrary, it is intended to cover various modifications and similar arrangements (as would be apparent to those skilled in the art). Therefore, the scope of the appended claims should be interpreted the broadest interpretation so as to encompass all such modifications and similar arrangements.

## Claims

1. A method of dynamically adjusting radar transmission power, comprising the following steps:
S10: transmitting a beam to scan an environment to be tested by a transmitting device;
S20: receiving an echo signal reflected by a target in the environment to be tested by a receiving device;
S30: capturing the echo signal and converting the echo signal into a digital signal by an analog-to-digital converter, so as to calculate and analyze a distance to, and echo intensity of, the target;
S40: setting a transmission power threshold value by a control module based on the distance and the echo intensity;
S50: calculating a transmission power configuration by the control module based on the transmission power threshold value;
S60: generating a control signal by the control module based on the transmission power configuration; and
S70: adjusting a transmission power by an attenuator based on the control signal, wherein the transmission power is utilized by the transmitting device to perform scanning of the target.

2. The method of dynamically adjusting radar transmission power as claimed in claim 1, wherein in step of S10, an angle of the beam of the transmitting device is adjusted by a phase control module.

3. The method of dynamically adjusting radar transmission power as claimed in claim 1, wherein in step of S20, the target is a plurality of targets, and the receiving device is configured to receive the echo signal reflected by each one of the plurality of targets, and in step of S30, the distance and the echo intensity of each one of the plurality of targets are calculated and analyzed.

4. The method of dynamically adjusting radar transmission power as claimed in claim 1, further comprising a step of S80: monitoring and analyzing a signal-to-noise ratio of the receiving device by a monitoring module to obtain a signal-to-noise ratio result, and evaluating an effect of the transmission power based on the signal-to-noise ratio result.

5. The method of dynamically adjusting radar transmission power as claimed in claim 4, wherein when the signal-to-noise ratio result is lower than a target value, the transmission power configuration is adjusted by the control module, thereby adjusting the transmission power of the transmitting device.

6. The method of dynamically adjusting radar transmission power as claimed in claim 4, when the transmitting device is continuously configured to scan the environment to be tested and a plurality of signal-to-noise ratio results are continuously obtained, a current transmission power configuration is determined based on the previously obtained signal-to-noise ratio result to decide whether an adjustment of the current transmission power configuration is required.

7. A system of dynamically adjusting radar transmission power for performing the method of dynamically adjusting radar transmission power as claimed in claim 1, comprising:
a transmitting device configured to scan an environment to be tested by transmitting a beam;
a receiving device configured to receive an echo signal reflected by a target in the environment to be tested;
an analog-to-digital converter electrically connected to the receiving device and configured to capture the echo signal and convert the echo signal into a digital signal, so as to calculate and analyze a distance to, and echo intensity of, the target;
a control module electrically connected to the analog-to-digital converter and configured to set a transmission power threshold value based on the distance and the echo intensity, calculate a transmission power configuration based on the transmission power threshold value, and generate a control signal based on the transmission power configuration; and
an attenuator electrically connected to the control module and configured to adjust a transmission power based on the control signal, wherein the transmission power is utilized by the transmitting device to perform scanning of the target.

8. The system of dynamically adjusting radar transmission power for performing the method of dynamically adjusting radar transmission power as claimed in claim 7, further comprising a phase control module electrically connected to the transmitting device and configured to adjust an angle of the beam of the transmitting device.

9. The system of dynamically adjusting radar transmission power for performing the method of dynamically adjusting radar transmission power as claimed in claim 7, further comprising a monitoring module configured to monitor and analyze a signal-to-noise ratio of the receiving device to obtain a signal-to-noise ratio result, and evaluate an effect of the transmission power based on the signal-to-noise ratio result.

10. A portable imaging system for performing the method of dynamically adjusting radar transmission power as claimed in claim 1, comprising:
a handheld detection component including a body and a probe assembly, wherein the probe assembly is disposed on the body and includes a radar unit and an image acquisition unit, the radar unit is selected from the group consisting of a terahertz radar unit, a sub-terahertz radar unit, and a millimeter wave radar unit, and the radar unit comprises: an oscillator, a frequency synthesizer, a phase control module, a power amplifier, an attenuator, a transmitting device, a receiving device, an analog-to-digital converter, and a digital front end, wherein the oscillator and the frequency synthesizer are configured to generate a carrier wave in a range of 30 to 300 GHz, the phase control module is configured to receive the carrier wave to adjust phase of the carrier wave, the power amplifier is electrically connected to the phase control module and is configured to amplify the carrier wave with adjusted phase, the attenuator is electrically connected to the power amplifier and is configured to adjust a transmission power based on a control signal, wherein the transmission power is utilized by the transmitting device to perform scanning of the target, the transmitting device is electrically connected to the attenuator and is configured to transmit the carrier wave to an environment to be tested with the transmission power, the receiving device is configured to receive an echo signal reflected by a target in the environment to be tested, the analog-to-digital converter is electrically connected to the receiving device and is configured to convert the echo signal into a digital signal, and the digital front end is electrically connected to the analog-to-digital converter and is configured to process the digital signal;
a host electrically connected to the handheld detection component, and comprising a control module, wherein the control module is configured to receive and analyze processed digital signal from the digital front end to obtain an imaging result,
wherein the analog-to-digital converter is further configured to calculate and analyze a distance to, and echo intensity of, the target based on the digital signal; and the control module is further configured to set a transmission power threshold value based on the distance and the echo intensity, calculate a transmission power configuration based on the transmission power threshold value, and generate the control signal based on the transmission power configuration.

11. The portable imaging system as claimed in claim 10, wherein the host further includes a monitoring module configured to monitor and analyze a signal-to-noise ratio of the receiving device to obtain a signal-to-noise ratio result, and evaluate an effect of the transmission power based on the signal-to-noise ratio result.

12. The portable imaging system as claimed in claim 10, wherein the host further includes a hardware-software switching module configured to switch among a hardware beam switching mode, a software beam switching mode, and a hybrid mode to adjust the carrier wave, wherein in the hardware beam switching mode, the transmitting device is activated by the hardware-software switching module to switch the carrier wave to a desired beam direction; in the software beam switching mode, phase offset of the transmitting device is calculated by the control module, and phase of the carrier wave is adjusted by the phase control module based on the phase offset, so that beam of the carrier wave is oriented to the desired beam direction; and in the hybrid mode, the transmitting device is first activated to switch the carrier wave to the desired beam direction, and then the phase offset of the transmitting device is calculated by the control module, and the phase of the carrier wave is adjusted by the phase control module based on the phase offset.
